# NEUE EUROPÄISCHE PATENTSCHRIFT

(11) **EP 1 843 234 B2**
(45) Veröffentlichungstag und Bekanntmachung des Hinweises auf die Entscheidung über den Einspruch: **20.12.2017**
(45) Hinweis auf die Patenterteilung: 17.06.2009
(21) Anmeldenummer: 06007470.5
(22) Anmeldetag: 08.04.2006
(51) Int. Cl.: G05D 16/06, F01M 13/00, F01M 13/02

(54) **Druckbegrenzungsventil, vozugsweise zur Regelung des Druckes im Kurbelgehäuse eines Verbrennungsmotors**
Pressure limiting valve, in particular for regulating the pressure in the crankcase of a combustion engine
Soupape de limitation de pression, en particulier pour régler la pression du carter d'un moteur à combustion interne

(43) Veröffentlichungstag der Anmeldung: 10.10.2007
(73) Patentinhaber: Polytec Automotive GmbH & Co. KG, 82538 Geretsried (DE)
(72) Erfinder: Janssen, Hans, 49413 Dinklage (DE); Soares, Jorge, 48493 Wettringen (DE); Esders, Helen, 49393 Lohne (DE)
(74) Vertreter: dompatent von Kreisler Selting Werner - Partnerschaft von Patent- und Rechtsanwälten mbB

(56) Entgegenhaltungen:
- DE-A1- 4 323 856
- DE-A1- 10 236 783
- DE-A1- 10 305 172
- DE-B4- 4 416 119
- DE-C2- 4 022 129
- DE-C2- 4 212 968
- DE-T2- 69 601 135
- DE-U1-202004 003 860
- US-A1- 2005 247 354

## Beschreibung

Die Erfindung bezieht sich auf ein Druckbegrenzungsventil, vorzugsweise zur Regelung des Kurbelgehäusedruckes, das zum Beispiel in Einrichtungen zur Abscheidung von Öl aus Blow-By-Gasen von Verbrennungsmotoren eingesetzt wird.

Zur Förderung des Blow-by-Gases und zur Abscheidung der Ölpartikel wird das Unterdruckpotential im Ansaugtrakt des Motors genutzt. Bedingt durch die unterschiedlichen Lastzustände des Motors im Betriebsverhalten und dem jeweiligen Verschleißzustand des Motors kommt es zu laufenden Durchsatzänderungen an Blow-By-Gasen bei wechselnden Saugrohrdrücken. Eine wesentliche Anforderung besteht darin, dass unter diesen Bedingungen der Unterdruck im Kurbelghäuse auf einem vorgegebenen Wert gehalten werden muss. Hierzu ist es bekannt, in den Blow-by-Gasstrom und/oder Reingasstrom ein Unterdruckbegrenzungsventil zu integrieren (DE 202 11 329 U1). Dieses sorgt dafür, dass ein bestimmter Druck im Kurbelgehäuse nicht unterschritten wird, auch dann, wenn an der Saugrohrseite ein starker Unterdruck anliegt. Das im Reingasstrom angeordnete Unterdruckregelventil bekannter Bauart besteht aus einem Gehäuse mit einem Gaseintrittsraum und einem in dieses eingebundenen Gasauslassstutzen. Der in das Gehäuse ragende Abschnitt des Gasauslassstutzens ist ringförmig ausgebildet und nach oben zeigend abgebogen. Das obere Ende dieses Abschnittes bildet den Ventilsitz. In dem Gehäuse ist oberhalb des Gasauslassstutzens eine flexible, verstellbare Membran angeordnet, die mittels eines aufgesetzten Deckels fest eingespannt ist, der den oberen Abschluss des Gehäuses bildet. In dem Raum zwischen dem Deckel und der Oberseite der Membran herrscht ein konstanter Druck, vorzugsweise der Umgebungs- bzw. Atmosphärendruck. Die Membran ist als einstückiger Ventilkörper ausgebildet, der einen verdickten Abschnitt besitzt, der den Ventilsitz überdeckt. Unmittelbar um den verdickten Abschnitt der Membran greift eine Schraubenfeder an, die an dem Gasauslassstutzen abgestützt ist. Das Unterdruckregelventil ist mit seiner Unterseite auf dem oberen Teilstück einer Einrichtung zur Abscheidung von Öl aus Blow-by-Gasen eines Verbrennungsmotors aufgesetzt. In Abhängigkeit vom an der Saugrohrseite anliegenden Unterdruck wird der Ventilkörper, ausgehend von der vollständig geöffneten Stellung, bei zunehmendem Unterdruck, parallel in Richtung Ventilsitz bewegt, wodurch der Strömungs- bzw. Durchlassquerschnitt verringert wird. Wenn die Membrankraft, also das Produkt aus der Multiplikation des Kurbelgehäuseunterdrucks mit der wirksamen Querschnittsfläche der Membran, größer als die Rückstellkraft der Schraubenfeder ist, liegt der verdickte Abschnitt des Ventilkörpers auf dem Ventilsitz auf. Da durch den Motor weiterhin ein Blow-by-Gas-Volumenstrom erzeugt wird, schließt es nicht vollständig. Vielmehr stellt sich ein Druckverhältnis ein, das unter anderem vom saugseitigen Unterdruck und vom Blow-by-Gas-Volumenstrom abhängig ist. Mitzunehmendem saugseitigen Unterdruck verbessert sich die Dichtigkeit des Dichtsitzes am Stutzen und es bedarf eines höheren Druckniveaus im Kurbelgehäuse, um den Blow-by-Gas-Volumenstrom weiterhin abführen zu können. Ein weiterer Nachteil dieses Unterdruckregelventils besteht in einer relativ großen Abhängigkeit des Kurbelgehäusedruckes vom jeweiligen Saugrohrdruck. Der jeweilige Strömungs- bzw. Durchlassquerschnitt des Ventils lässt sich in Abhängigkeit von den momentanen Druckverhältnissen nur in geringem Maße beeinflussen. Dadurch besteht eine erhöhte Gefahr, dass bei niedrigem Saugrohrdruck und großen Durchsätzen an Blow-by-Gas im Ölabscheider sich der Druck im Kurbelgehäuse auf einen unzulässigen Wert erhöht. Dabei ist zu berücksichtigen, dass im Ölabscheider, insbesondere bei Volllast des Motors, zusätzliche Druckverluste auftreten, die zu einer Erhöhung des Kurbelgehäusedruckes führen.

DE 102 36 783 A1 beschreibt ein Druckregelventil mit einer verstellbaren Membran.

Der Erfindung liegt die Aufgabe zugrunde, ein Druckbegrenzungsventil, insbesondere zur Regelung des Druckes im Kurbelgehäuse eines Verbrennungsmotors, zu schaffen, das sich durch ein verbessertes Regelverhalten auszeichnet.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 7.

Das vorgeschlagene Druckregelventil ist so ausgebildet, dass bei vollständiger Öffnung des Ventils der Durchlassquerschnitt zwischen der Anlagefläche des Ventilkörpers und der Anlagefläche des Ventilsitzes sich zu einer Seite bzw. in einer Richtung verjüngt und sich der Abstand zwischen den beiden Anlageflächen kontinuierlich verändert, wobei der Ventilkörper mit zunehmendem Unterdruck eine zweistufige Schließbewegung ausführt. In einer ersten Stufe führt der Ventilkörper eine lineare Bewegung aus, bis die Anlagefläche des Ventilkörpers in Berührungskontakt mit der Anlagefläche des Ventilsitzes gelangt. Anschließend führt der Ventilköper in einer zweiten Stufe eine Schwenkbewegung aus, bis zur vollständig geschlossenen Stellung des Ventils.

Die Maßnahme, die beiden den Durchlassquerschnitt begrenzenden Anlageflächen von Ventilsitz und Ventilkörper derart auszubilden, dass sie nicht parallel zueinander verlaufen, führt zu einem deutlich verbesserten Regelverhalten zur Beeinflussung des Kurbelgehäusedruckes. Aufgrund des am Anfang vergrößerten Durchlassquerschnittes, der in einer Richtung, zum Beispiel in Strömungsrichtung bzw. in Richtung Gasauslass, kontinuierlich abnimmt, und der zweistufigen Schließcharakteristik des Ventils, ist in Abhängigkeit von den herrschenden Druckverhältnissen der Durchlass- bzw. Strömungsquerschnitt für beispielsweise in den Ansaugtrakt abzuführendes Reingas in einem relativ weiten Bereich veränderbar.

Das vorgeschlagene Druckregelventil ermöglicht die Einhaltung eines nahezu konstanten Druckes im Kurbelgehäuse, auch dann, wenn es im Saugrohr zu großen Schwankungen des Unterdruckes kommt. Die aufgestellte Druckregelkennlinie des Ventils zeigt eine geringe Abhängigkeit des Kurbelgehäusedruckes vom jeweiligen Saugrohrdruck und Blow-by-GasDurchsatz, im Vergleich zu konventionellen Druckregelventilen. Die Gefahr des Entstehens eines unzulässigen Überdruckes im Kurbelgehäuse wird deutlich verringert. Herkömmliche Druckregelventile im Reingasstrom von Ölabscheidern zur Kurbelgehäuseentlüftung besitzen einen scharfen Schaltpunkt. Der Ventilsitz schließt bei einem bestimmten Druckverhältnis zwischen Kurbelgehäuse und Umgebung. Da immer noch ein Volumenstrom (Blow-By-Gas) vorhanden ist, schließen diese nicht vollständig. Es stellt sich vielmehr ein Druckverhältnis ein, das unter anderem vom Volumenstrom und vom Saugrohrunterdruck abhängt. Mit zunehmendem Saugrohrunterdruck verbessert sich der Dichtsitz am Stutzen des Ventils und es bedarf bei konstantem Blow-By-Gasstro ein höheres Druckniveau im Kurbelgehäuse, um diesen Volumenstrom abzuführen. Dieses kann soweit gehen, dass bei sehr hohem Saugunterdruck ein Überdruck im Kurbelgehäuse auftritt. Im Vergleich dazu wird durch das erfindungsgemäße Druckregelventil bei zunehmendem Saugrohrunterdruck ein vorzeitiges Ansteigen des Kurbelgehäusedruckes verhindert. Der Schaltpunkt ist im Gegensatz zu herkömmlichen Ventilen nicht mehr scharf definiert. Aufgrund der nichtparallel zueinander verlaufenden Anlageflächen von Ventilsitz und Ventilkörper entsteht eine richtungsgebundene Verringerung des Strömungsquerschnitts am Ventilsitz und eine zweistufige Schließbewegung der Membran. Diese Maßnahme führt zu einem deutlich breiteren Schaltbereich im Vergleich zu herkömmlichen Ventilen mit parallel verlaufenden Anlageflächen. Der durchströmte Querschnitt am Dichtsitz nimmt also nicht schlagartig ab, sondern allmählich, in Abhängigkeit vom Grad der Querschnittsveränderung. Dieser Effekt zögert das nicht gewollte, vom Saugunterdruck abhängige Schaltverhalten hinaus.

Im allgemeinen versucht man diesen ungewollten Regeleffekt (scharfer Schaltpunkt) durch ein möglichst großes Verhältnis zwischen Membrandurchmesser und Dichtsitz zu reduzieren. Die bekannten Regelventile sind daher relativ groß oder der Druckverlust des Druckregelventils nimmt deutlich zu, weil der Dichtsitz-Durchmesser reduziert werden muss. Die Folgen sind neben höheren Kosten und erhöhten Bauraumproblemen ein limitierter Regelbereich.

Das erfindungsgemäße Druckregelventil kann bei gleichem Regelverhalten in seiner Bauweise deutlich kleiner ausgeführt werden, oder aber einen erweiterten Regelbereich aufweisen. Die den Durchlassquerschnitt begrenzenden Anlageflächen von Ventilsitz und Ventilkörper können unterschiedlich ausgeführt sein. Eine der Anlageflächen von Ventilsitz oder Ventilkörper kann als schräg verlaufende Fläche und die andere Anlagefläche als ebene Fläche ausgebildet sein, die im rechten Winkel zur Mittelachse des Ventils angeordnet ist. Die Mittelachse liegt in der Bewegungsrichtung der Membran und definiert die Einbaulage des Ventils. In senkrechter Einbaulage des Ventils ist die im rechten Winkel zur Mittelachse des Ventils angeordnet Anlagefläche eine ebene waagerechte Fläche und in horizontaler Einbaulage eine ebene senkrechte Fläche. Der Neigungswinkel der jeweils schräg verlaufenden Anlagefläche beträgt 5 bis 30°.

Die Anlagefläche des Ventilsitzes und die mit diesem in Kontakt gelangende Anlagefläche des Ventilkörpers können auch als ebene, schräg verlaufende Flächen ausgebildet sein, die gleiche oder unterschiedliche Neigungswinkel besitzen. In diesem Fall sollte die Summe der Neigungswinkel der schräg verlaufenden Anlagefläche 5 bis 30° betragen.

Das vorgeschlagene Druckregel- bzw. Druckbegrenzungsventil ist vorzugsweise in die Reingasleitung zwischen einem Ölabscheider zur Entölung von Kurbelgehäuseentlüftungsgasen und dem Ansaugtrakt des Motors eingebunden. Es kann aber auch in der Blow-By-Gas-Zuführungsleitung zum Abscheider oder in einer Bypassleitung des Kurbelgehäusentlüftungssystems integriert sein. Es kann auch da eingesetzt werden, wo der Gasdurchsatz druckabhängig selbsttätig verändert wird und die Membran in Abhängigkeit von einem Differenzdruck in eine den Ventilsitz schließende Stellung bewegbar ist.

Die Erfindung soll nachstehend an einem Ausführungsbeispiel erläutert werden. In der zugehörigen Zeichnung zeigen:
Fig. 1 eine erste Ausführungsvariante des Druckregelventils in vollständig geöffneter Stellung, als Querschnittsdarstellung,
Fig. 2 das Druckregelventil gemäß Fig. 1 in teilweise geöffneter Stellung, als Querschnittsdarstellung,
Fig. 3 das Druckregelventil gemäß Fig. 1 in geschlossener Stellung, als Querschnittsdarstellung,
Fig. 4 das Kurbelgehäusedruck - Membran-Weg-Diagramm für das in den Figuren 1 bis 3 gezeigte Druckregelventil,
Fig. 5 eine zweite Ausführungsvariante des Druckregelventils in vollständig geöffneter Stellung, als Querschnittsdarstellung,
Fig. 6 eine dritte Ausführungsvariante des Druckregelventils in vollständig geöffneter Stellung, als Querschnittsdarstellung,

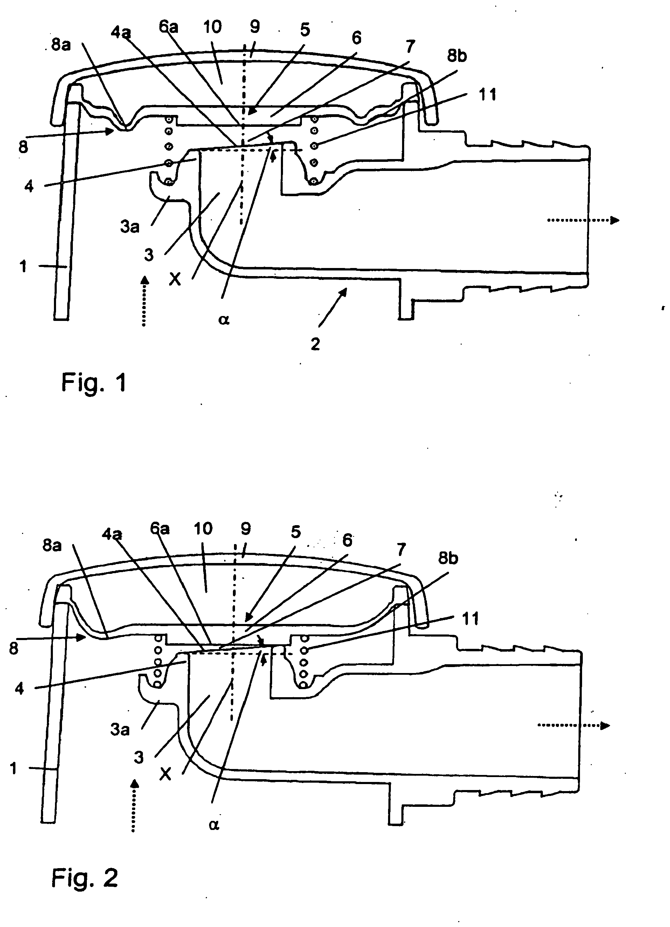

Das in den Figuren 1 bis 3 gezeigte Druckregelventil ist in Strömungsrichtung hinter einem Abscheidesystem angeordnet, das zur Abscheidung von Öl aus Blow-by-Gas eines Verbrennungsmotors dient. Das Abscheidesystem kann aus einem Grob- und Feinabscheider bestehen. Im Falle eines Zyklonabscheiders kann es auch auf dem Tauchrohr des Abscheiders aufgesetzt sein. In der Zeichnung ist das Abscheidesystem nicht mit dargestellt. Das Abscheidesystem steht über eine Leitung oder einen Kanal mit dem Kurbelgehäuse des Motors in Verbindung. Im Kurbelgehäuse angesammeltes Blow-by-Gas gelangt aufgrund der Druckdifferenz zwischen Kurbelgehäuse und Ansaugtrakt in den Abscheider. In diesem wird im Blow-by-Gasstrom enthaltenes Öl abgeschieden und dem Ölkreislauf des Motors zugeführt. Das gereinigte Gas strömt vom Auslass der Feinabscheiders ab und durchströmt das Druckregelventil. Der Strömungsverlauf des Reingases ist in den Figuren 1 bis 3 durch Pfeile gekennzeichnet. Der Gasauslass 2 des Druckregelventils steht über eine Leitung mit dem Ansaugtrakt des Motors in Verbindung.

Das in den einzelnen Figuren gezeigte Druckregelventil ist in senkrechter Einbaulage dargestellt, wobei die senkrechte Mittelachse eingezeichnet ist, die mit X gekennzeichnet ist. Das Ventil besteht aus einem Gaseinlassstutzen 1, in den ein rohrförmiger Gasauslassstutzen 2 eingebunden ist. Dieser besitzt einen nach oben abgebogenen Abschnitt 3, dessen oberes Ende den Ventilsitz 4 bildet. In der den in den Figuren 1 bis 3 gezeigten Ausführung ist der Ventilsitz 4 als ebene, schräge Anlagefläche 4a ausgebildet, die in Strömungsrichtung des Gases, in einem definierten Neigungswinkel a von 5 bis 30°, ansteigend verläuft.

Oberhalb des Gasauslassstutzens 2 ist in dem Gaseinlassstutzen 1 eine flexible Membran 5 in Form einer Kreisscheibe mittels eines Deckels 9 eingespannt. In dem Raum 10 zwischen der Oberseite der Membran 5 und dem Deckel 9 herrscht Umgebungsdruck. Der Dekkel 9 weist eine nicht näher gezeigte Öffnung auf, über die die Verbindung zur Atmosphäre hergestellt wird.

Die Membran 5 besitzt einen als Ventilkörper 6 ausgebildeten verdickten Abschnitt, der im geschlossenen Zustand des Druckregelventils den Ventilsitz 4 dichtend abdeckt. In der in den Figuren 1 bis 3 gezeigten Ausführungsvariante besitzt der Ventilkörper 6 eine ebene, waagegerecht verlaufende Anlagefläche 6a, bezogen auf die senkrechte Einbaulage des Ventils. Bei einem waagerechten Einbau des Ventils würde die Anlagefläche 6a senkrecht verlaufen. Der sich an den Ventilkörper 6 anschließende, radial erstreckende flexible Abschnitt der Membran 5 besitzt eine umlaufende Dehnungsfalte 8, die in zwei halbkreisförmige Abschnitte 8a und 8b mit unterschiedlichem Dehnungsvermögen unterteilt ist. Der Abschnitt 8a ist so ausgebildet, dass dieser während der Schließbewegung des Ventilkörpers 6 eine größere Auslenkung des Ventilkörpers ermöglicht als der andere Abschnitt 8b. Der von den Anlageflächen des Ventilkörpers 6 und Ventilsitzes 4 begrenzte Durchlass- bzw. Strömungsquerschnitt 7 besitzt einen sich in Strömungsrichtung bzw. in Richtung Gasauslass verjüngenden Verlauf.

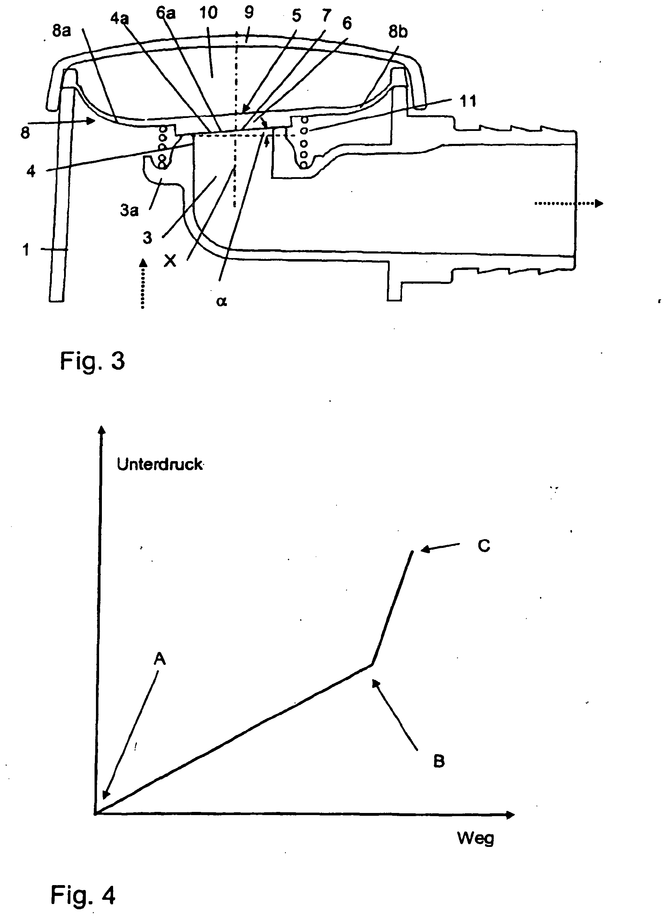

Am oberen Abschnitt 3 des Gasausiassstutzens 2 ist ein ringförmiger Bund 3a angeordnet, der als Aufnahme und Abstützung für eine Schraubenfeder 11 dient. Das obere Ende der Schraubenfeder 11 liegt unmittelbar neben dem Ventilkörper 6 an der Membran 5 an. Durch die Federwirkung der Schraubenfeder 11 wird die Rückstellkraft der Membran 5 festgelegt. Vorzugsweise besitzt die Schraubenfeder eine progressive Federcharakteristik. Die in Fig. 1 gezeigte, vollständig geöffnete Stellung des Druckregelventils liegt dann vor, wenn im Gasauslass 2 ein Unterdruck herrscht, der geringer ist als die durch die Schraubenfeder 11 bewirkte Rückstellkraft. Erhöht sich der Unterdruck im Gasauslass 2 derart, dass die Rückstellkraft der Schraubenfeder 11 überwunden wird, so bewegt sich der Ventilkörper 6 parallel in Richtung Ventilsitz 4 (Fig. 2). Erreicht der Ventilköper 6 den oberen Abschnitt des Ventilsitzes 4 und nimmt der Unterdruck weiter zu, so wird der Ventilkörper 6 durch eine Schwenkbewegun bis zur vollständigen Anlage an den Ventilsitz 4 ausgelenkt (Fig. 3). Die Schwenkbewegung wird durch das größere Dehnungsvermögen des Abschnittes 8a der Dehnungsfalte 8 ermöglicht. Im geschlossenen Zustand des Druckregelventils befindet sich der Ventilkörper 6 in einer geneigten Lage.

Das vorgeschlagene Druckregelventil besitzt im Vergleich zu herkömmlichen Ventilen eine zweistufige Schließcharakteristik. Die den Schließteller bildende Membran 5 führt während der Schließbewegung erst eine lineare Bewegung aus, bis zum Kontakt mit dem Ventilsitz 4, wie in Fig. 2 gezeigt. Mit steigendem Unterdruck, die Membran 5 stützt sich am Ventilsitz 4 ab, wird die Membran 5 durch eine bis in die Endschließlage bewegt (Fig. 3), wobei der Abstützpunkt bzw. die Abstützfläche die Schwenkachse bildet. Dadurch besitzt das Druckregelventil ein verbessertes Regelverhalten, da sich durch die Abstützung der Membran 5 am Ventilsitz 4 die mechanischen Verhältnisse ändern. Die effektive Membrankraft, das Produkt aus Kurbelgehäuseunterdruck und Membranfläche, reduziert sich, sobald die Membran 5 einseitig am Ventilsitz 4 zur Anlage kommt (Fig. 2). Die bis dahin senkrecht zur Membranfläche wirkende Membrankraft teilt sich nun in zwei Momente auf, welche um den Auflage- bzw. Abstützpunkt herum (Fig. 2) gegeneinander wirken. Das in Fig. 4 dargestellte Diagramm (Kurbelgehäusedruck - Membran-Weg) veranschaulicht diesen Einfluss. In diesem Diagramm ist mit A der Zustand bei vollständig geöffnetem Ventil den Figuren 1 bis 3 gezeigten Ausführungsvariante besitzt der Ventilkörper 6 eine ebene, waagegerecht verlaufende Anlagefläche 6a, bezogen auf die senkrechte Einbaulage des Ventils. Bei einem waagerechten Einbau des Ventils würde die Anlagefläche 6a senkrecht verlaufen. Der sich an den Ventilkörper 6 anschließende, radial erstreckende flexible Abschnitt der Membran 5 besitzt eine umlaufende Dehnungsfalte 8, die in zwei halbkreisförmige Abschnitte 8a und 8b mit unterschiedlichem Dehnungsvermögen unterteilt ist. Der Abschnitt 8a ist so ausgebildet, dass dieser während der Schließbewegung des Ventilkörpers 6 eine größere Auslenkung des Ventilkörpers ermöglicht als der andere Abschnitt 8b. Der von den Anlageflächen des Ventilkörpers 6 und Ventilsitzes 4 begrenzte Durchlass- bzw. Strömungsquerschnitt 7 besitzt einen sich in Strömungsrichtung bzw. in Richtung Gasauslass verjüngenden Verlauf.

Am oberen Abschnitt 3 des Gasauslassstutzens 2 ist ein ringförmiger Bund 3a angeordnet, der als Aufnahme und Abstützung für eine Schraubenfeder 11 dient. Das obere Ende der Schraubenfeder 11 liegt unmittelbar neben dem Ventilkörper 6 an der Membran 5 an. Durch die Federwirkung der Schraubenfeder 11 wird die Rückstellkraft der Membran 5 festgelegt. Vorzugsweise besitzt die Schraubenfeder eine progressive Federcharakteristik. Die in Fig. 1 gezeigte, vollständig geöffnete Stellung des Druckregeiventits liegt dann vor, wenn im Gasauslass 2 ein Unterdruck herrscht, der geringer ist als die durch die Schraubenfeder 11 bewirkte Rückstellkraft. Erhöht sich der Unterdruck im Gasauslass 2 derart, dass die Rückstellkraft der Schraubenfeder 11 überwunden wird, so bewegt sich der Ventilkörper 6 parallel in Richtung Ventilsitz 4 (Fig. 2). Erreicht der Ventilköper 6 den oberen Abschnitt des Ventilsitzes 4 und nimmt der Unterdruck weiter zu, so wird der Ventilkörper 6 durch eine Schwenkbewegung bis zur vollständigen Anlage an den Ventilsitz 4 ausgelenkt (Fig. 3). Die Schwenkbewegung wird durch das größere Dehnungsvermögen des Abschnittes 8a der Dehnungsfalte 8 ermöglicht. Im geschlossenen Zustand des Druckregelventils befindet sich der Ventilkörper 6 in einer geneigten Lage.

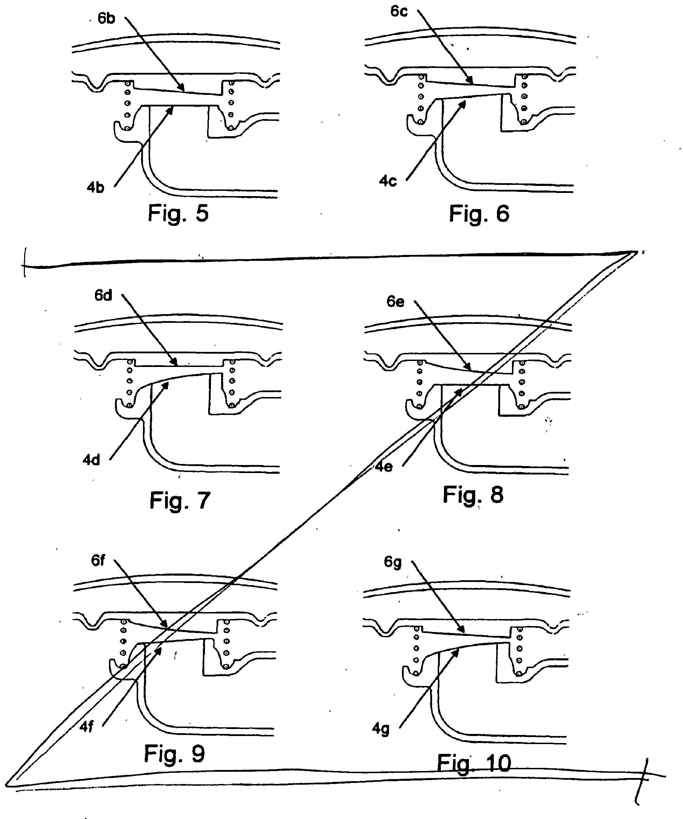

Das vorgeschlagene Druckregelventil besitzt im Vergleich zu herkömmlichen Ventilen eine zweistufige Schließcharakteristik. Die den Schließteller bildende Membran 5 führt während der Schließbewegung erst eine lineare Bewegung aus, bis zum Kontakt mit dem Ventilsitz 4, wie in Fig. 2 gezeigt. Mit steigendem Unterdruck, die Membran 5 stützt sich am Ventilsitz 4 ab, wird die Membran 5 durch eine Schwenkbewegung bis in die Endschließlage bewegt (Fig. 3), wobei der Abstützpunkt bzw. die Abstützfläche die Schwenkachse bildet. Dadurch besitzt das Druckregelventil ein verbessertes Regelverhalten, da sich durch die Abstützung der Membran 5 am Ventilsitz 4 die mechanischen Verhältnisse ändern. Die effektive Membrankraft, das Produkt aus Kurbelgehäuseunterdruck und Membranfläche, reduziert sich, sobald die Membran 5 einseitig am Ventilisitz 4 zur Anlage kommt (Fig. 2). Die bis dahin senkrecht zur Membrantläche wirkende Membrankraft teilt sich nun in zwei Momente auf, weiche um den Auflage- bzw. Abstützpunkt herum (Fig. 2) gegeneinander wirken. Das in Fig. 4 dargestellte Diagramm (Kurbelgehäusedruck - Membran-Weg) veranschaulicht diesen Einfluss. In diesem Diagramm ist mit A der Zustand bei vollständig geöffnetem Ventil gezeigt (Fig. 1). B zeigt den Zustand nach Beendigung der linearen Bewegung der Membran 5 (Fig. 2) und C den Zustand bei vollständig geschlossenem Ventil (Fig. 3). Die Membran 5 ist flexibel ausgebildet und besteht aus Kunststoff. Der Ventilkörper 6 der Membran 5 kann einteilig oder zweiteilig ausgebildet sein. Bei einer zweiteiligen Ausführung besteht dieser aus zwei Schichten aus einem elastomeren Zweikomponenten-Kunststoff, wobei die in Richtung Ventilsitz 4 zeigende Schicht weich eingestellt ist. In den Figuren 5 und 6 sind weitere Ausführungsvarianten dargestellt, die einen Ausschnitt des Druckregelventils mit unterschiedlichen Gestaltungen der Anlageflächen von Ventilkörper 6 und Ventilsitz zeigen. Bis auf die Anlageflächen sind diese Ausführungsvarianten identisch mit dem in den Figuren 1 bis 3 gezeigten Druckregelventil. In den Figuren 1 bis 3 ist die Anlagefläche 6a des Ventilkörpers 6 als ebene, waagegerecht verlaufende Fläche ausgebildet. Zur Erzielung der notwendigen Verjüngung des Durchlassquerschnittes 7 ist die Anlagefläche 4a des Ventilsitzes 4 als geneigte bzw. schräg verlaufende Fläche bzw. Ebene ausgeführt, die in Richtung Gasauslass 2 ansteigt. In Fig. 5 ist hierzu die umgekehrte Ausführung gezeigt, die Anlagefläche 4b des Ventilsitzes 4 ist als ebene, waagegerecht verlaufende Fläche und die Anlagefläche 6b des Ventilkörpers 6 als geneigte bzw. schräg verlaufende Fläche ausgebildet, die in Richtung Gasauslass 2 abfällt. Gemäß der Ausführung in Fig. 6 sind beide Anlageflächen 4c und 6c in einer Richtung zueinander geneigt. Der Neigungswinkel der beiden Anlageflächen 4c und 6c kann gleich oder unterschiedlich sein. Die Summe der Neigungswinkel beider Anlageflächen 4c, 6c beträgt vorzugsweise 5 bis 30°. Die Größe des Neigungswinkel der Anlageflächen ist von geometrischen und funktionalen Randbedingungen abhängig. Zu beachten ist, dass die Schraubenfeder 11 nicht abknicken darf und der Faltenbalg der Membran 5 nicht überdehnt wird. Die Abschrägung der jeweiligen Anlageflächen muss nicht unbedingt linear in einer Richtung verlaufen. Wesentlich ist, dass der Durchlassquerschnitt 7 am Anfang größer ist als am Ende bzw. hinteren Abschnitt des gebildeten Kanals, also sich zu einer Seite hin verjüngt.

Aufgrund der unterschiedlichen Ausgestaltungen und Anordnungen der Anlageflächen von Ventilkörper und Ventilsitz ist es möglich, das Regelverhalten der Ventile gezielt zu beeinflussen.

## Patentansprüche

1. Druckbegrenzungsventil, vorzugsweise zur Regelung des Druckes im Kurbelgehäuse eines Verbrennungsmotors, bestehend aus einem Gaseinlass (1) und einem Gasauslass (2) mit einem Ventilsitz (4) mit einer Anlagefläche sowie einer verstellbaren, unter einer definierten Rückstellkraft stehenden Membran (5) mit einem Ventilkörper (6), der eine mit dem Ventilsitz (4) in Kontakt gelangende Anlagefläche aufweist, wobei die Membran (5) unter einem konstanten Druck und dem im Gasauslass (2) anliegenden Druck steht und in Abhängigkeit von der Druckdifferenz der Durchlassquerschnitt (7) zwischen der Anlagefläche des Ventilsitzes (4) und der Anlagefläche des Ventilkörpers (6) veränderbar ist, wobei bei vollständiger Öffnung des Ventils der Durchlassquerschnitt (7) zwischen der Anlagefläche (6a, 6b, 6c, 6d, 6e, 6f, 6g) des Ventilkörpers (6) und der Anlagefläche (4a, 4b, 4c, 4d, 4e, 4f, 4g) des Ventilsitzes (4) zu einer Seite hin verjüngt ausgebildet ist, wobei sich der Abstand zwischen den beiden Anlageflächen kontinuierlich verändert, und der Ventilkörper (6) mit zunehmendem Unterdruck eine zweistufige Schließbewegung ausführt, in einer ersten Stufe eine lineare Bewegung, bis der Ventilkörper (6) mit seiner Anlagefläche (6a, 6b, 6c, 6d, 6e, 6f, 6g) in Berührungskontakt mit der Anlagefläche (4a, 4b, 4c, 4d, 4e, 4f, 4g) des Ventilsitzes (4) gelangt, und anschließend in einer zweiten Stufe eine Schwenkbewegung, bis zur vollständig geschlossenen Stellung des Ventils, **dadurch gekennzeichnet, dass**
a) eine der Anlageflächen (4a, 6b) von Ventilsitz (4) oder Ventilkörper (6) als schräg verlaufende Fläche ausgebildet ist und die andere Anlagefläche (4b, 6a) als ebene Fläche ausgebildet ist, die im rechten Winkel zur Mittelachse (X) angeordnet ist oder
b) **beide** Anlageflächen **(4c, 6c)** von Ventilsitz (4) **und** Ventilkörper (6) als **ebene,** schräg verlaufende **Flächen** ausgebildet **sind,** wobei der Neigungswinkel (α) der schräg verlaufenden Anlageflächen (4a, 6b) 5° bis 30 ° beträgt.

2. Druckbegrenzungsventil nach Ansprüch 1, **dadurch gekennzeichnet, dass** die Anlagefläche (4c) des Ventilsitzes (4) und die mit diesem in Kontakt gelangende Anlagefläche (6c) des Ventilkörpers (6) als ebene, schräg verlaufende Flächen ausgebildet sind, die gleiche oder unterschiedliche Neigungswinkel besitzen.

3. Druckbegrenzungsventil nach Anspruchs, **dadurch gekennzeichnet, dass** die Summe der Neigungswinkel der schräg verlaufenden Anlageflächen (4c, 6c) 5° bis 30° beträgt.

4. Druckbegrenzungsventil nach einem der Ansprüche 1 bis 3, **dadurch gekennzeichnet, dass** der sich an den Ventilkörper (6) anschließende Abschnitt der Membran (5) mindestens eine umlaufende Dehnungsfalte (8) besitzt.

5. Druckbegrenzungsventil nach Anspruch 4, **dadurch gekennzeichnet, dass** die Dehnungsfalte (8) in Abschnitte (8a, 8b) mit unterschiedlichem Dehnungsvermögen unterteilt ist.

6. Druckbegrenzungsventil nach einem der Ansprüche 1 bis 5, **dadurch gekennzeichnet, dass** der Ventilkörper (6) der Membran (5) aus zwei Schichten aus einem elastomeren Zweikomponenten-Kunststoff besteht, wobei die in Richtung Ventilsitz (4) zeigende Schicht weich eingestellt ist.

7. Druckbegrenzungsventil nach einem der Ansprüche 1 bis 6, **dadurch gekennzeichnet, dass** zur Erzeugung der Rückstellkraft der Membran (5) eine Schraubenfeder (11) mit progressiver Federcharakteristik angeordnet ist.

## Claims

1. A pressure relief valve, preferably for controlling the pressure in the crankcase of an internal combustion engine, consisting of a gas inlet (1) and a gas outlet (2) with a valve seat (4) comprising a contact surface and an adjustable diaphragm (5) under a defined restoring force with a valve body (6) having a contact surface that comes into contact with said valve seat (4), wherein said diaphragm (5) is under a constant pressure and under a pressure prevailing in the gas outlet (2) and the passage cross-section (7) can change depending on the pressure difference between the contact surface of the valve seat (4) and the contact surface of the valve body (6), wherein the passage cross-section (7) between the contact surface (6a, 6b, 6c, 6d, 6e, 6f, 6g) of the valve body (6) and the contact surface (4a, 4b, 4c, 4d, 4e, 4f, 4g) of the valve seat (4) has a tapering design towards one side when the valve is completely open, wherein the distance between the two contact surfaces changes continuously and the valve body (6) performs a two-step closing movement as the pressure is more and more reduced, in a first step a linear movement until the valve body (6) with its contact surface (6a, 6b, 6c, 6d, 6e, 6f, 6g) reaches contact with the contact surface (4a, 4b, 4c, 4d, 4e, 4f, 4g) of the valve seat (4), and subsequently in a second step a pivoting movement until the valve is in a completely closed position, **characterized in that**
a) one of the contact surfaces (4a, 6b) of the valve seat (4) or valve body (6) is designed as an inclined surface, and the other contact surface (4b, 6a) is designed as a flat surface arranged at a right angle with the central axis (X); or
b) both contact surfaces (4c, 6c) of the valve seat (4) and valve body (6) are designed as plane inclined surfaces, wherein the inclination angle (α) of said inclined contact surfaces (4a, 6b) is from 5° to 30°.

2. The pressure relief valve according to claim 1, **characterized in that** the contact surface (4c) of the valve seat (4) and the contact surface (6c) of the valve body (6), which comes into contact with the former, are designed as flat inclined surfaces having the same or different inclination angles.

3. The pressure relief valve according to claim 2, **characterized in that** the sum of the inclination angles of the inclined contact surfaces (4c, 6c) is from 5° to 30°.

4. The pressure relief valve according to any of claims 1 to 3, **characterized in that** the segment of the diaphragm (5) adjacent to the valve body (6) has at least one circumferential expansion fold (8).

5. The pressure relief valve according to claim 4, **characterized in that** said expansion fold (8) is subdivided into segments (8a, 8b) having different expansion capacities.

6. The pressure relief valve according to any of claims 1 to 5, **characterized in that** the valve body (6) of diaphragm (5) consists of two layers of an elastomeric two-component plastic material, wherein the layer facing towards the valve seat (4) is flexible.

7. The pressure relief valve according to any of claims 1 to 6, **characterized in that** a coil spring (11) having a progressive spring characteristic is provided for producing the restoring force of the diaphragm (5).

## Revendications

1. Soupape de commande de pression, de préférence pour commander la pression dans le carter d'un moteur à combustion interne, consistant en une entrée de gaz (1) et une sortie de gaz (2) avec un siège de soupape (4) avec une surface de contact et une membrane (5) ajustable étant sous une force de rappel définie avec un corps de soupape (6) ayant une surface de contact entrant en contact avec le siège de soupape (4), dans laquelle ladite membrane (5) est sous une pression constante et sous une pression présente dans la sortie de gaz (2) et la section transversale de passage (7) entre la surface de contact du siège de soupape (4) et la surface de contact du corps de soupape (6) peut changer selon la différence de pression, dans laquelle la section transversale de passage (7) entre la surface de contact (6a, 6b, 6c, 6d, 6e, 6f, 6g) du corps de soupape (6) et la surface de contact (4a, 4b, 4c, 4d, 4e, 4f, 4g) du siège de soupape (4) s'effile vers une coté lorsque la soupape est complètement ouverte, dans laquelle la distance entre les deux surfaces de contact change continuellement et le corps de soupape (6) effectue un mouvement de fermeture en deux étapes lorsque la pression devient de plus en plus réduite, dans une première étape un mouvement linéaire jusqu'à ce que le corps de soupape (6) avec sa surface de contact (6a, 6b, 6c, 6d, 6e, 6f, 6g) entre en contact avec la surface de contact (4a, 4b, 4c, 4d, 4e, 4f, 4g) du siège de soupape (4), et ensuite dans une deuxième étape un mouvement de pivotement jusqu'à ce que la soupape soit dans une position complètement fermée, **caractérisée en ce que**
a) l'une des surfaces de contact (4a, 6b) du siège de soupape (4) ou du corps de soupape (6) est conçue comme surface inclinée, et l'autre surface de contact (4b, 6a) est conçue comme surface plane disposée à angle droit par rapport à l'axe central (X); ou
b) les deux surfaces de contact (4c, 6c) du siège de soupape (4) et du corps de soupape (6) sont conçues comme surfaces planes inclinées, dans laquelle l'angle d'inclination (α) desdites surfaces de contact inclinées (4a, 6b) est de 5° à 30°.

2. Soupape de commande de pression selon la revendication 1, **caractérisée en ce que** la surface de contact (4c) du siège de soupape (4) et la surface de contact (6c) du corps de soupape (6) qui entre en contact avec celle-ci sont conçues comme surfaces planes inclinées ayant les mêmes ou différents angles d'inclination.

3. Soupape de commande de pression selon la revendication 2, **caractérisée en ce que** la somme des angles d'inclination des surfaces de contact inclinées (4c, 6c) est de 5° à 30°.

4. Soupape de commande de pression selon l'une des revendications 1 à 3, **caractérisée en ce que** la section de la membrane (5) adjacente au corps de soupape (6) possède au moins un pli d'expansion périphérique (8).

5. Soupape de commande de pression selon la revendication 4, **caractérisée en ce que** ledit pli d'expansion (8) est divisé en sections (8a, 8b) avec des capacités d'expansion différentes.

6. Soupape de commande de pression selon l'une des revendications 1 à 5, **caractérisée en ce que** le corps de soupape (6) de la membrane (5) consiste en deux couches d'une matière plastique élastomérique à deux composants, dans laquelle la couche tournée vers le siège de soupape (4) est souple.

7. Soupape de commande de pression selon l'une des revendications 1 à 6, **caractérisée en ce qu'**un ressort hélicoïdal (11) ayant une courbe caractéristique de ressort progressive est disposé pour produire la force de rappel de ladite membrane (5).
